(19) Europäisches Patentamt
European Patent Office
Office européen des brevets

(11) Publication number: **0 297 049 B1**

(12) **EUROPEAN PATENT SPECIFICATION**

(45) Date of publication of patent specification: **16.01.91**

(51) Int. Cl.[5]: **C 02 F 5/10,** C 02 F 5/12

(21) Application number: **88810418.9**

(22) Date of filing: **17.06.88**

(54) **Scale inhibition.**

(30) Priority: **23.06.87 GB 8714627
23.07.87 GB 8717516**

(43) Date of publication of application:
**28.12.88 Bulletin 88/52**

(45) Publication of the grant of the patent:
**16.01.91 Bulletin 91/03**

(84) Designated Contracting States:
**DE FR GB IT**

(56) References cited:
**EP-A-0 133 210
EP-A-0 172 154
EP-A-0 184 894
EP-A-0 188 884
AT-B- 377 963
DE-A-3 022 924
US-A-4 710 303**

**The file contains technical information submitted after the application was filed and not included in this specification**

(73) Proprietor: **CIBA-GEIGY AG
Klybeckstrasse 141
CH-4002 Basel (CH)**

(72) Inventor: **Cook, Barry, Dr.
11 Warwick Drive
Urmston Manchester M31 2AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 297 049 B1**

## Description

The present invention relates to scale inhibition and, in particular, to a method of inhibiting barium scale deposition from waters of high barium content e.g. deeper formation waters.

Deeper formation water, e.g. those found in the North Sea, have lower pH values of about 3 to 7 and a higher barium content than formation waters which are closer to the earth's surface.

In the subsea secondary recovery by water flooding, a great deal of water is required and recourse may be needed to such deeper formation waters for mixing with sea-water derived from upper sea regions. Such mixing of incompatible waters can lead to severe barium sulfate scaling problems in well bore production equipment and conventional anti-scalants e.g. polyacrlates are not effective against this particular scale.

From GB—A—2 152 919 a method became known, to treat scale in pressurised boiler water systems with a copolymer of maleic or fumaric acid and vinyl sulfonic or allyl sulfonic acid. There is no mention of the barium scale from waters of high barium content and the method is restricted to pressurised boiler systems.

Another reference, GB—A—2 105 319, describes a treatment of aqueous systems by a composition comprising an aminocarboxylate and a copolymer of maleic acid and styrene sulfonic acid. The composition relies upon the essential use, as co-inhibitor, of an amino-carboxylate compound.

In I. E. Woerner and R. A. Holzer, Proc. Int. Water Conf. Eng. Soc. West Pa (81), pages 281—287, volume 42, an experimental sulfonated polymer was found suitable as an inhibitor for $BaSO_4$-scale. However, no indication of the precise structure of the sulfonated polymer in question could be found.

R. W. Mitchell, D. M. Grist and M. J. Boyle in Journal of Petroleum Technology, (80), pages 904—912, volume 32, number 5, simply describe polymeric scale inhibitors (A and B) and organic phosphonates (C and E) as barium sulfate inhibitors and the effect of adding barium sulfate inhibitors to the seawater. Also, no precise structure of the polymer in question could be found.

We have now found that certain water-soluble vinyl sulfonate homo- or copolymers provide excellent barium scale inhibition in waters having a high barium content.

Accordingly, the present invention provides a method of inhibiting barium sulfate scale deposition from water of high barium content, comprising adding to the water an effective amount of water-soluble polymer, or salts thereof, containing 100 to 10% of total polymer of a moiety A, 0 to 90% of total polymer of a moiety B and 0 to 25% of total polymer of a moiety D, wherein A is derived from vinyl sulfonic acid, β-styrenesulfonic acid, 1-propene sulfonic acid, 2-propene sulfonic acid and sulfomaleic acid; derived from acrylic acid, methacrylic acid, maleic acid or anhydride or fumaric acid and D is a moiety different from B having the formula III

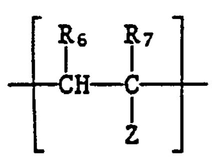
(III)

wherein $R_6$ is hydrogen, methyl or a residue $—COOR_8$ in which $R_8$ is hydrogen or $C_1—C_4$alkyl group; $R_7$ is hydrogen, $C_1—C_4$alkyl, hydroxymethyl or $—COOR_9$ in which $R_9$ is hydrogen, a residue of formula IV

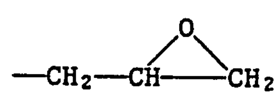
(IV)

or a residue of formula V

$$-[CH_2-CH(R_{10})O]_zH \qquad (V)$$

in which $R_{10}$ is hydrogen, methyl or phenyl and z is an integer from 1 to 20, or $R_9$ is a straight or branched chain alkyl having 1 to 4 carbon atoms or $C_1—C_4$alkyl substituted by $—SO_3M$ or by $—COOM$ where M is hydrogen, an alkali- or alkaline earth metal, ammonium or an amine residue;

Z is $—COOR_9$ where $R_9$ is as defined above, or Z is a straight or branched alkyl having 1 to 4 carbon atoms or said alkyl substituted by one to three carboxylic acid groups; or Z is phenyl or said phenyl substituted by $SO_3M$ or by $—PO_3M_2$; or Z is acetoxy, hydroxy, hydroxymethyl, acetoxymethyl, $—CH_2SO_3M$, $—CH_2PO_3H_2$, $—PO_3M_2$ or $—PO_3M'_2$ in which M has its previous significance and M' is M or alkyl of 1 to 4 carbon atoms; or Z is a residue $—CONR_{11}R_{12}$ wherein $R_{11}$ and $R_{12}$ are the same or different and each is hydrogen, straight or branched chain alkyl having 1 to 4 carbon atoms, hydroxymethyl, $—CH(OH)COOM$, $—C(CH_3)_2CH_2SO_3M$, $—C(CH_3)_2CH_2PO_3M_2$ or $—N(R_{13})COCH_3$ in which $R_{13}$ is hydrogen or straight or branched chain alkyl of 1 to 4 carbon atoms and M has its previous significance.

Preferably the percentages of moieties A, B and D being such that the molecular weight of the polymer ranges from 500 to 10,000 while retaining its water solubility.

Salts of the polymers used in the method of the invention are products in which some or all of the

acidic hydrogens in acidic polymers have been replaced by alkali metal ions, ammonium ions or quaternised amine radicals. These salts also have good activity in inhibiting barium sulfate scale deposition.

$C_1$—$C_4$ residues $R_7$, $R_8$, $R_9$, $R_{11}$, $R_{12}$, $R_{13}$ or Z are e.g. mthyl, ethyl, n-propyl, isopropyl or n-butyl residues.

Carboxyl-substituted $C_1$—$C_4$alkyl residues Z include carboxymethyl, carboxyethyl, carboxypropyl, 1,1-dicarboxymethyl and 2,3,4-tricarboxybutyl residues.

Alkali metal atoms of M or M' are, particularly, sodium or potassium atoms; alkaline earth metal atoms M or M' are, preferably calcium, barium or strontium atoms; and amine residues M or M' are, especially,

$$-\overset{+}{N}H(CH_3)_3,\ -\overset{+}{N}H(C_2H_5)_3 \text{ or } -\overset{+}{N}H(CH_2CH_2OH)_3.$$

The polymers used in the method of the present invention may be produced by reacting 100 to 10% of A with 0 to 90% of B and 0 to 25% of $CH(R_6) = C(R_7)Z$ wherein $R_6$, $R_7$ and Z have their previous significance, under conventional free radical-initiated polymerisation processes. Depending upon the solubility of the respective monomer or monomers, the polymerisation is carried out in an aqueous or partially aqueous solution, for instance water/lower alkanol solution, lower alkanols such as isopropanol, or hydrocarbon solvents e.g. toluene or xylene. Conventional free radical initiators which may be used include peroxides e.g. hydrogen peroxide, benzoyl peroxide, acetyl peroxide, di-t-butyl peroxide, t-butylhydroperoxide; perdicarbonates; persulfates; azobis-isobutyronitrile; and the so-called redox and heavy metal polymerisation initiators. The polymerisation procedure may also include the use of telogens, or chain-transfer agents e.g. alcohols, mercaptans, hypophosphorous acid or orthophosphorous acids or their salts to control the molecular weight of the polymer product.

Comonomers $CH(R_6) = C(R_7)Z$ include acrylamide, N-hydroxymethylacrylamide, N,N-dimethylacrylamide, N-vinyl-N-methylacetamide, N-allylacetamide, N-acrylamidoglycollic acid, methacrylic acid, methyl methacrylate, fumaric acid, maleic acid, maleic anhydride, 2-carboxyethyl acrylate, 3-buten-1,2,3-tricarboxylic acid, dimethyl maleate, diethyl maleate, diethyl fumarate, itaconic acid, dimethyl itaconate, allyl sulfonic acid, 4-styrene sulfonic acid, sodium- or potassium salts of 3-sulfopropyl acrylic acid, 2-acrylamido-2-methyl-propane sulfonic acid, vinyl phosphonic acid, styrene phosphonic acid, allyl alcohol, allyl acetate, vinyl acetone, styrene, α-methyl styrene, hexene, octene, N-arylamidopropane sulfonic acid, glycidyl methacrylate, crotonic acid, ethyl crotonate, polyethylene glycol esters and polypropylene glycol esters of (meth)acrylic acids.

Alternatively, a salt of the comonomer may be employed in which the acidic hydrogens have been partially or completely replaced by cations M or M' derived from a suitable salt forming base.

The products of the polymerisation process are obtained as solutions. These may be subjected to partial or complete evaporation under reduced pressure. The unpurified reaction products may be used as the polymeric products in the method of the invention. The reaction products may be purified if desired. The purification procedure may be:

i) by evaporation of reaction solvent, dissolving the residue in water, washing with a water-immiscible organic solvent e.g. ether and evaporation of the aqueous solution.

ii) by evaporation of reaction solvent, dissolving the residue in methanol and reprecipitation by addition of ether.

When the reation products are employed without purification, the ratio of reactants is important in that the activity of the product varies accordingly.

Salts of the polymers used according to the invention in which some or all of the acidic hydrogens in the polymer having been replaced by the cations derived from a suitable salt forming base, may be prepared by mixing an aqueous or alcoholic solution of the polymer with an aqueous or alcoholic solution containing an amount of the requisite base in excess of, equal to or less than the stoichiometric requirement. The solvent may then be removed by evaporation.

The polymer is preferably added to the water to be inhibited against barium sulfate scale deposition in an amount ranging from 1 to 200 ppm especially from 1 to 30 ppm, based on the weight of the water to be treated.

The polymer scale inhibitor used according to the invention may be used alone or in conjunction with other compounds known to be useful in the treatment of aqueous systems, e.g. corrosion inhibitors; dispersing and/or threshold agents; precipitating agents; oxygen scavengers; sequestering agents; antifoaming agents; biocides; and demulsifiers.

Corrosion inhibitor co-additives include for example, water soluble zinc salts; phosphates; polyphosphates; phosphonic acids and their salts, for example, hydroxyethyl-diphosphonic acid (HEDP) nitrilotris methylene phosphonic acid and methylamino dimethylene phosphonoacarboxylic acids and their salts, for example, those described in German Offenlegungsshrift 2632774, hydroxyphosphonoacetic acid, 2-phosphonobutane-1,2,4-tricarboxylic acid and those disclosed in GG—1572406; nitrates, for example sodium nitrate; nitrites e.g. sodium nitrite; molybdates e.g. sodium molybdate; tungstates; silicates e.g. sodium silicate; benzotriazole, bis-benzotriazole or copper deactivating benzotriazole or tolutriazole derivatives of their Mannich base derivatives; mercaptobenzothiazol; N-acyl sarcosines; N-acylimino diacetic acids; ethanolamines; fatty amines; and polycarboxylic acids, for example, polymaleic

aid and polyacrylic acid, as well as their respective alkali metal salts, copolymers of maleic anhydride, e.g. copolymers of maleic anhydride and sulfonated styrene, copolymers of acrylic acid e.g. copolymers of acrylic acid and hydroxyalkylated acrylic acid, and substituted derivatives of polymaleic and polyacrylic acids and their copolymers. Moreover, in such completely aqueous systems, the corrosion inhibitor used according to the invention may be used in conjunction with dispersing and/or threshold agents e.g. polymerised acrylic acid (or its salts), phosphino-polycarboxylic acids (as described and claimed in British Patent 1458235), the cotelomeric compounds described in European Patent Application No. 0150706, hydrolysed polyacrylonitrile, polymerised methacrylic acid and its salts, polyacrylamide and co-polymers thereof from acrylic and methacrylic acids, lignin sulphonic acids and its salts, tannin, naphthalene sulphonic acid/formaldehyde condensation products, starch and its derivatives, cellulose, acrylic acid/ lower alkyl hydroxyacrylate copolymers e.g. those described in U.S. Patent Specification No. 4029577, styrene/maleic anhydride copolymers and sulfonated styrene homopolymers e.g. those described in U.S. Patent Specification No. 4374733 and combinations thereof. Specific threshold agents, such as for example, 2-phosphonobutane-1,2,4-tri-carboxylic acid (PBSAM), hydroxyethyldiphosphonic acid (HEDP) hydrolysed polymaleic anhydride and its salts, alkyl phosphonic acid, hydroxyphosphonoacetic acid 1-aminoalkyl-1, 1-diphosphonic acids and their salts, and alkali metal polyphosphates, may also be used.

Particularly interesting additive packages are those comprising compounds of formula I with one or more of polymaleic acid or polyacrylic acid or their copolymers, or substituted co-polymers, HEDP, PBSAM, triazoles such as tolutriazole, molybdates and nitrates.

Precipitating agents used may be alkali metal orthophosphates or -carbonates.

Oxygen scavengers include alkali metal sulfites and hydrazines; sequestering agents may be nitrilotriacetic acid and its salts; antifoaming agents such as silicones, e.g. polydimethylsiloxanes, distearylsebacamide, diestearyl adipamide and related products derived from ethylene oxide and/or propylene oxide condensations, in addition to fatty alcohols, such as capryl alcohols and their ethylene oxide condensates; biocides includes, e.g. amines, quaternary ammonium compounds, chlorophenols, sulfur-containing compounds such as sulfones, methylene bis thiocyanates and carbamates, arolein, isothiazolones, brominated propionamides, triazines, phophonium compounds, glutaraldehyde, chlorine and chlorine-release agents and organ-metallic compounds such as tributyl tin oxide, and demulsifiers include alkyl phenol resin ethoxylates derived from butyl-, amyl-, octyl- and nonyl-phenols, ethylene oxide-propylene oxide block copolymers, polyalkylene oxide esters of mono- and polycarboxylic acids, alkoxylated alkyl amines, alkoxylated polyamines, sulfonated systems, polysiloxane derivatives and cationic polyacrylamides.

The following Examples further illustrate the present invention.

### Example 1

Vinyl Sulfonic Acid/Acrylic Acid Copolymer (molar ratio 1:3)

A solution of 54 parts by weight of acrylic acid, 130 parts by weight sodium vinyl sulfonate (as a 25% aqueous solution), and 5.5 parts by weight of sodium hypophosphite in 150 parts by weight of water, is prepared and is designated solution 1. A further solution of 1.5 parts by weight of sodium persulfate in 100 parts by weight of water is prepared and designated solution 2. The two solutions (solution 1 and solution 2) are added synchronously, over 2 hours, to a reaction vessel containing 60 parts by weight of water at the reflux temperature (100°C). The reflux temperature is maintained for a further 1 hour to give 500.8 parts by weight of polymer solution having a solids content of 20.85%. HPLC analysis shows the solution to contain only trace amounts (at most 0.5%) of unreacted monomers.

### Example 2

Vinyl Sulfonic Acid/Maleic Acid Copolymer (Molar ratio 1:1)

A solution of maleic acid mono sodium salt is prepared by the addition of 20 parts by weight of sodium hydroxide to a mixture of 49 parts by weight of maleic anhydride in 50 parts by weight of water. To this, is added 216.6 parts by weight of sodium vinyl sulfonate (as a 30% aqueous solution) and the resulting solution is heated to the reflux temperature (100°C). A further solution of 5.95 parts by weight of sodium persulfate in 32.1 parts by weight of hydrogen peroxide (30% w/v) is added, dropwise, over 4 hours at 100°C and the heating further continued for 2 hours, to give 346 parts by weight of a polymer solution having a solids content of 43%. HPLC analysis showed less than 1% unreacted monomer.

### Examples 3 and 4

Barium Sulfate Threshold Test

A volume (50 ml) of a sodium solution is added to an equal volume of a solution containing barium chloride and sodium chloride and which already contains the additive under test. After addition of an acetic acid/sodium acetate buffer to buffer the pH at 5.5, the resultant solution is stored at 25°C for 24 hours, and then filtered.

At the end of this time the barium remaining in solution is determined by Atomic Absorption (AA). The results are expressed as % inhibition of barium sulfate precipitation.

Reagents

1) Solution 1 0.3518 g/l $BaCl_2 \cdot 2H_2O$ (A. R. quality) and 40.00 g NaCl (A.R. quality). (This gives 98.9 ppm as $Ba^{++}$ and 20,000 ppm of NaCl in final 100 ml test solution).

2) Solution 2 0.800 g/l $Na_2SO_4$. (This gives 270.5 ppm as $SO_4$ in final 100 ml test solution).

3) Solution 3 Molar acetic acid solution — 6.0 g glacial acetic acid (A.R. quality) are dissolved in distilled water and made up to 100 ml.

4) Solution 4 Molar sodium acetate solution — 13.61 g $CH_3COONa$, $3H_2O$ (A.R. quality) are dissolved in distilled water and made up to 100 ml.

5) Solution 5 0.1% solids additive solutions — the appropriate weight of additive is dissolved in distilled water and adjusted to pH 5.5 with HCl solution or NaOH solution, and made up to 100 ml.

Procedure

A constant temperature water bath is set at 35°C. 50 ml of solution (1) is placed in a clean, new 4 ounce (113.4 g) glass bottle. 0.10 ml of solution (3) and 1.00 ml of solution (4) are added using a micro-pipette. 0.60 ml (6 ppm) of the additive solution (solution (5)) is added using a micro-pipette. 50 ml of solution (2) is then added. The screw cap is placed on the bottle and the reagents are mixed. The bottle is placed in the constant temperature water bath at 25°C for 4 hours without agitation. 50 ml of the liquor is filtered through a 0.45 micron mesh filter into a 4 ounce (113.4 g) glass bottle using a 50 ml plastic syringe. 20 ml of the liquor is immediately pipetted into a standard 100 ml volumetric flask and diluted to the mark with distilled water. The $Ba^{++}$ concentration of this solution is then determined by Atomic Absorption (AA).

All tests are done in duplicate, including blank tests (no additive).

Additionally, for the purpose of AA measurement, a matrix solution minus $Ba^{++}$ is required to standardise the instrument.

The matrix solution is prepared by dissolving 2 g NaCl (A.R. quality) in 50 ml distilled water in a 4 ounce (113.4 g) glass bottle. 50 ml of solution (2) are added. The reagents are mixed and 50 ml of the mixture pipetted into a 250 ml standard volumetric flask. 150 ml of distilled water are added, without making up to the mark.

Calculation

Before calculating I, the AA ppm $Ba^{++}$ readings should be multiplied by the dilution faction (i.e. × 5).

$$I\ \% = \frac{(\text{ppm } Ba^{++} - \text{ppm } Ba^{++} \text{ (blank)})}{98.9 - \text{ppm } Ba^{++} \text{ (blank)}} \times \frac{100}{1}$$

I % = percentage of inhibition of barium sulfate precipitation. The results are set out in Table I.

Table I

| Example | Test Compound | % inhibition to precipitation at dose level 6 ppm |
|---|---|---|
| 3 | Prod. Ex. 1 | 87 |
| 4 | Prod. Ex. 2 | 92 |

**Claims**

1. A method of inhibiting barium sulfate scale deposition from water of high barium content, comprising adding to the water an effective amount of a water-soluble polymer, or salts thereof, containing 100 to 10% by weight of total polymer of a moiety A, 0 to 90% by weight of total polymer of a moiety B and 0 to 25% by weight of total polymer of a moiety D, wherein A is derived from vinyl sulfonic acid, β-styrenesulfonic acid, 1-propene sulfonic acid, 2-propene sulfonic acid and sulfomaleic acid, B is derived from acrylic acid, methacrylic acid, maleic acid or anhydride or fumaric acid, and D is a moiety different from B and having the formula III

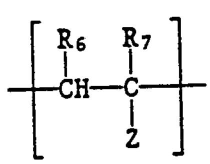

(III)

wherein $R_6$ is hydrogen, methyl or a residue $-COOR_8$ in which $R_8$ is hydrogen or $C_1-C_4$alkyl group; $R_7$ is hydrogen, $C_1-C_4$alkyl, hydroxymethyl or $-COOR_9$ in which $R_9$ is hydrogen, a residue of formula IV

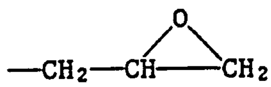 (IV)

or a residue of formula V

$$-[CH_2-CH(R_{10})O]_zH \quad (V)$$

in which $R_{10}$ is hydrogen, methyl or phenyl and z is an integer from 1 to 20, or $R_9$ is a straight or branched chain alkyl having 1 to 4 carbon atoms or $C_1-C_4$alkyl substituted by $-SO_3M$ or by $-COOM$ where M is hydrogen, an alkali- or alkaline earth metal, ammonium or an amine residue;

Z is $-COOR_9$ where $R_9$ is as defined above, or Z is a straight or branched alkyl having 1 to 4 carbon atoms or said alkyl substituted by one to three carboxylic acid groups; or Z is phenyl or said phenyl substituted by $SO_3M$ or by $-PO_3M_2$; or Z is acetoxy, hydroxy, hydroxymethyl, acetoxymethyl, $-CH_2SO_3M$, $-CH_2PO_3H_2$, $-PO_3M_2$ or $-PO_3M'_2$ in which M has its previous significance and M' is M or alkyl of 1 to 4 carbon atoms; or Z is a residue $-CONR_{11}R_{12}$ wherein $R_{11}$ and $R_{12}$ are the same or different and each is hydrogen, straight or branched chain alkyl having 1 to 4 carbon atoms, hydroxymethyl, $-CH(OH)COOM$, $-C(CH_3)_2CH_2SO_3M$, $-C(CH_3)_2CH_2PO_3M_2$ or $-N(R_{13})COCH_3$ in which $R_{13}$ is hydrogen or straight or branched chain alkyl of 1 to 4 carbon atoms and M has its previous significance.

2. A method according to claim 1 in which the percentages of moiety A, B and D being such that the molecular weight of the polymer ranges from 500 to 10,000 while retaining its water solubility.

3. A method according to claim 1 wherein A is derived from vinyl sulfonic acid.

4. A method according to claim 1 in which the polymer is added to the water in an amount ranging from 1 to 200 ppm, based on the weight of the water to be trated.

5. A method according to claim 4 wherein the polymer is added in amount ranging from 1 to 30 ppm, based on the weight of water to be treated.

6. A method according to claim 1 in which the polymer is added to the water together with one or more of corrosion inhibitors; dispersing and/or threshold agents; precipitating agents; oxygen scavengers; sequestering agents; antifoaming agents; biocides and demulsifiers.

7. A method according to claim 6 in which the polymer is added to the water together with one or more of polymaleic acid or polyacrylic acid or their copolymers, or substituted copolymers, HEDP, PBSAM, triazoles such as tolutriazole, molybdates and nitrites.

**Patentansprüche**

1. Verfahren zur Verhinderung der Bildung von Bariumsulfatabscheidungen aus Wasser mit hohem Bariumgehalt durch Versetzen des Wassers mit einer wirksamen Menge eines wasserlöslichen Polymers oder seines Salzes, wobei das Polymer oder sein Salz 100 bis 10 Gew.-% bezogen auf das gesamte Polymer einer Gruppe A enthält, 0 bis 90 Gew.-% bezogen auf das gesamte Polymer einer Gruppe B und 0 bis 25 Gew.% bezogen auf das gesamte Polymer einer Gruppe D, wobei A von Vinylsulfonsäure, β-Styrolsulfonsäure, 1-Propensulfonsäure, 2-Propensulfonsäure oder Sulfonmaleinsäure abgeleitet ist, B von Acrylsäure, Methacrylsäure, Maleinsäure oder Maleinsäureanhydrid oder Fumarsäure, und D verschieden von B ist und der Formel III

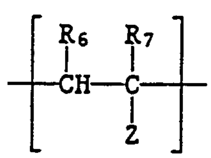 (III)

entspricht, worin $R_6$ Wasserstoff, Methyl oder ein Rest der Formel $-COOR_8$, worin $R_8$ Wasserstoff oder Alkyl mit 1 bis 4 Kohlenstoffatomen ist, $R_7$ Wasserstoff, Alkyl mit 1 bis 4 Kohlenstoffatomen, Hydroxymethyl oder $-COOR_9$ ist, worin $R_9$ Wasserstoff, ein Rest der Formel IV

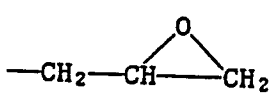 (IV)

oder der Formel V

$$-[CH_2-CH(R_{10})O]_zH \quad (V)$$

ist, worin $R_{10}$ Wasserstoff, Methyl oder Phenyl und Z eine ganze Zahl von 1 bis 20 ist, oder $R_9$ geradkettiges oder verzweigtes Alkyl mit 1 bis 4 Kohlenstoffatomen oder mit $—SO_3M$ oder —COOM substituiertes Alkyl mit 1 bis 4 Kohlenstoffatomen ist, worin M Wasserstoff, ein Alkali- oder Erdalkalimetallatom, Ammonium oder ein Aminrest ist, Z $—COOR_9$ die angegebene Bedeutung hat, oder geradkettiges oder verzweigtes Alkyl mit 1 bis 4 Kohlenstoffatomen ist, wobei dieses Alkyl mit 1 bis 3 Carbonsäuregruppen substituiert ist, oder Z Phenyl oder mit $—SO_3M$ oder $—PO_3M_2$ substituiertes Phenyl ist, oder Z Acetoxy, Hydroxyl, Hydroxymethyl, Acetoxymethyl, $—CH_2SO_3M$, $—CH_2PO_3H_2$, $—PO_3M_2$ oder $—PO_3M'_2$ ist, worin M die angegebene Bedeutung hat, und M' die Bedeutung von M hat oder Alkyl mit 1 bis 4 Kohlenstoffatomen ist, oder Z ist ein Rest der Formel $—CONR_{11}R_{12}$, worin $R_{11}$ und $R_{12}$ gleich oder verschieden sind und Wasserstoff, geradkettiges oder verzweigtes Alkyl mit 1 bis 4 Kohlenstoffatomen, Hydroxymethyl, —CH(OH)COOM, $—C(CH_3)_2CH_2SO_3M$, $—C(CH_3)_2CH_2PO_3M_2$ oder $—N(R_{13})COCH_3$ sind, worin $R_{13}$ Wasserstoff oder geradkettiges oder verzweigtes Alkyl mit 1 bis 4 Kohlenstoffatomen ist, und M die angegebene Bedeutung hat.

2. Verfahren nach Anspruch 1, worin die Anteile der Gruppen A, B und D so gewählt sind, dass das Molekulargewicht des Polymers 500 bis 10,000 beträgt, wobei es seine Wasserlöslichkeit behält.

3. Verfahren nach Anspruch 1, worin A von Vinylsulfonsäure abgeleitet ist.

4. Verfahren nach Anspruch 1, worin das Polymer Wasser in einer Menge von 1 bis 200 ppm, bezogen auf das Gewicht des zu behandelnden Wassers, zugesetzt wird.

5. Verfahren nach Anspruch 4, worin das Polymer Wasser in einer Menge von 1 bis 30 ppm, bezogen auf das Gewicht des zu behandelnden Wassers, zugesetzt wird.

6. Verfahren nach Anspruch 1, worin das Polymer Wasser zusammen mit einem oder mehreren Korrosionsinhibitoren, Dispergier- und/oder Niederschlagsinhibitoren, Fällungsmittel, Sauerstoffänger, Sequestriermittel, Antischaummittel, Biocide und Demulgatoren zugefüht wird.

7. Verfahren nach Anspruch 6, worin das Polymer Wasser zusammen mit Polymaleinsäure oder Polyacrylsäure oder ihren Copolymeren oder substituierten Copolymeren, HEDP, PBSAM, Triazolen wie Tolutriazol, Molybdaten und/oder Nitriten zugesetzt wird.

**Revendications**

1. Une méthode pour empècher le dépot de tartre de sulfate de baryum dans des eaux à forte teneur en baryum, consistant à ajouter à l'eau une quantité appropriée d'un polymère soluble dans l'eau, ou d'un sel de celui-ci, contenant 100 à 10% en poids du polymère total de motifs A, 0 à 90% du poids du polymère total, de motifs B, et 0 à 25% du poids du polymère total, de motifs D, ou A provenant de l'acide vinylsulfonique, de l'acide β-styrènesulfonique, de l'acide propène-1-sulfonique, de l'acide propène-2-sulfonique ou de l'acide sulfomaléique, B de l'acide acrylique, de l'acide méthacrylique, de l'acide ou de l'anhydride maléique ou de l'acide fumarique, et D etant un motif différent de B de formule III

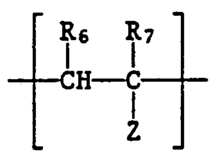

(III)

dans laquelle $R_6$ represénte l'hydrogène, un méthyle ou un radical $—COOR_8$, dans lequel $R_8$ représente l'hydrogène ou un groupe alkyle en $C_1—C_4$; $R_7$ représente l'hydrogène, un alkyle en $C_1—C_4$, un hydroxyméthyle ou $—COOR_9$ dans lequel $R_9$ représente l'hydrogène, un radical de formule IV

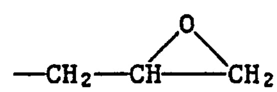

(IV)

ou un radical de formule V

$$-[CH_2-CH(R_{10})O]_zH \qquad (V)$$

dans laquelle $R_{10}$ représente l'hydrogène, un méthyle ou un phényle et z représente un entier de 1 à 20, ou $R_9$ représente une chaine alkyle linéaire ou ramifiée ayant 1 à 4 atomes de carbone ou un alkyle en $C_1—C_4$ substitué par $—SO_3M$ ou par —COOM ou M représente un hydrogène, un metal alcalin ou alcalino-terreux, de l'ammonium ou un radical d'amine; Z représente $—COOR_9$ ou $R_9$ est comme défini plus haut, ou Z représente un alkyle linéaire ou ramifié ayant 1 à 4 atomes de carbone ou le meme alkyle substitué avec un à trois groups acide carboxylique; ou Z représente un phényle ou le meme phényle substitué par $—SO_3M$ ou par $PO_3M_2$; ou Z représente un acetoxy, un hydroxy, un hydroxyméthyle, un acétoxyméthyle, $—CH_2SO_3M$, $—CH_2PO_3H_2$, $—PO_3M_2$ ou $—PO_3M'_2$ dans lequel M à la meme signification que précédement et M' représente M ou un alkyle à 1 à 4 atomes de carbone; ou Z représente un radical $—CONR_{11}R_{12}$ dans lequel $R_{11}$ et $R_{12}$ sont les memes ou différent et chacun d'eux représente l'hydrogène, une chaine alkyle linéaire ou ramifiée ayant 1 à 4 atomes de carbone, un hydroxyméthyle, —CO(OH)COOM, $—C(CH_3)_2CH_2SO_3M$, $—C(CH_3)_2CH_2PO_3M_2$ ou $—N(R_{13})COCH_3$ dans lequel $R_{13}$ représente l'hydrogène ou une

chaine alkyle linéaire ou ramifiée ayant 1 à 4 atomes de carbone et M a sa signification précédente.

2. Une méthode selon la revendication 1 dans laquelle les proportions des motifs A, B et D sont tels que le poids moléculaire du polymère soit compris entre 500 et 10.000, tout en conservant sa solubilité dans l'eau.

3. Une méthode selon la revendication 1 dans laquelle A provient de l'acide vinyl sulfonique.

4. Une méthode selon la revendication 1 dans laquelle le polymère est ajouté à l'eau à des doses de 1 à 200 ppm, par rapport à l'eau à traiter, en poids.

5. Une méthode selon la revendication 4 dans laquelle le polymère est ajouté à des doses de 1 à 30 ppm.

6. Une méthode selon la revendication 1 dans laquelle le polymère est ajouté à l'eau avec un ou plusieurs inhibiteurs de corrosion, agents dispersants et/ou de seuil, agents de précipitation, capteurs d'oxygène, agents séquestrants, agents antimousses, biocides et désémulsionnants.

7. Une méthode selon la revendication 6 dans laquelle le polymère est ajouté à l'eau avec ou un plusieurs des additifs suivants: acide polymaléique ou acide polyacrylique ou leurs copolymères ou copolymères substitués, HEDP, PBSAM, triazoles comme le tolutriazole, molybdates et nitrites.